# EUROPÄISCHE PATENTANMELDUNG

(11) **EP 3 686 959 A1**
(43) Veröffentlichungstag der Anmeldung: **29.07.2020**
(21) Anmeldenummer: 20151162.3
(22) Anmeldetag: 10.01.2020
(51) Int. Cl.: H01M 2/10, H01M 2/12

(54) **GEHÄUSE FÜR BATTERIEN**

(30) Priorität: 23.01.2019 DE 102019101592; 01.02.2019 DE 102019102551
(71) Anmelder: Tegimus Holding GmbH, 68169 Mannheim (DE)
(72) Erfinder: BAUM, Armin, 64668 Rimbach (DE); CAPPELUCCI, Peter, 68199 Mannheim (DE)
(74) Vertreter: Wesch, Arno

(57) **Zusammenfassung**

Ein Gehäuse (6, 6', 6", 6"') zur Aufnahme von Batterien, umfassend einen Gehäuseinnenraum (8, 6b) und mindestens eine äußere Wandung (7a), ist im Hinblick auf die Aufgabe, ein Gehäuse, insbesondere Batteriegehäuse, anzugeben, welches es erlaubt, eine Vielzahl von Batterien möglichst problemlos und sicher in einem vorgegebenen Raum anzuordnen dadurch gekennzeichnet, dass der äußeren Wandung (7a) mindestens ein Adapter (27a, 27b) zum Anbinden eines weiteren Gehäuses (6, 6', 6", 6"') und/ oder einer Basisschiene (30) zugeordnet ist.

## Beschreibung

Die Erfindung betrifft ein Gehäuse nach dem Oberbegriff des Patentanspruchs 1.

In Fahrzeugen werden zunehmend Batterien eingesetzt, um die Fahrzeuge elektrisch zu betreiben. Die Batterien werden in möglichst wärmeresistenten oder feuerresistenten Batteriegehäusen aufgenommen, um diese beispielsweise im Fall eines von außen auf das Batteriegehäuse einwirkenden Feuers oder von außen einwirkender Wärme vor einer Entzündung zu schützen bzw. eine Brandausbreitung von innen nach außen zu verhindern.

Batteriegehäuse können aus Stahl oder Aluminium gefertigt sein. Andere Materialien sind ebenfalls für den Aufbau eines Batteriegehäuses denkbar.

In der Praxis besteht der Bedarf, möglichst viele Batterien auf engem Raum sicher anzuordnen, um eine hohe Leistungsdichte zu ermöglichen. Zugleich sollen die Gehäuse mechanisch stabil sein.

Der Erfindung liegt vor diesem Hintergrund die Aufgabe zugrunde, ein Gehäuse, insbesondere Batteriegehäuse, anzugeben, welches es erlaubt, eine Vielzahl von Batterien möglichst problemlos und sicher in einem vorgegebenen Raum anzuordnen.

Die vorliegende Erfindung löst die genannte Aufgabe durch die Merkmale des Patentanspruchs 1.

Erfindungsgemäß ist erkannt worden, dass ein Adapter, welcher einer äußeren Wandung, einem Boden oder einem Deckel zugeordnet ist, die Anbindung eines weiteren Gehäuses ermöglicht. Gehäuse mit solchen Adaptern können modular übereinander gestapelt und alternativ oder zugleich lateral nebeneinander angeordnet werden. Der Adapter bzw. mehrere Adapter stellen sicher, dass die Gehäuse ihre relative Position zueinander nicht verändern und die Batterien räumlich sicher fixiert sind. So können durch geschickte Anordnung mehrerer Gehäuse sehr viele Batterien in einem vorgegebenen Raum sicher angeordnet werden, und es kann eine hohe Leistungsdichte erzeugt werden. Die Gehäuse können nach Art eines Baukastensystems zusammengestellt werden. Gehäuse, die mit Adaptern versehen sind, sind überdies in vorteilhafter Weise versteift und mechanisch relativ stabil.

Der Adapter könnte Schraubmittel, Rastmittel oder Klemmmittel aufweisen, um zwei Gehäuse aneinander anzubinden und/ oder ein Gehäuse an eine Basisschiene anzubinden. Konkret ist denkbar, dass zwei schienenartige Adapter durch eine Art Überwurfschiene als Befestigungselement miteinander verbunden werden, wobei die Überwurfschiene jeweils an zwei Adaptern verschiedener Gehäuse festgeschraubt wird. Hierzu könnte im Adapter ein Gewinde vorgeschnitten sein, oder es könnte eine Mutter am Adapter vorgesehen sein. Es ist aber auch denkbar, dass zwei Adapter miteinander verrastet, verklipst oder verklemmt werden. Auch die Basisschiene kann mit einem Adapter verrastet oder verklemmt werden, so dass auf Werkzeuge bei der Montage verzichtet werden kann.

Ein erster Adapter eines ersten Gehäuses könnte durch ein Befestigungselement mit einem zweiten Adapter eines zweiten Gehäuses verbindbar und/ oder verbunden sein. So können zwei Gehäuse verliersicher und lagesicher aneinander angebunden werden.

Ein Adapter eines Gehäuses könnte durch ein Befestigungselement mit einer Basisschiene verbindbar und/ oder verbunden sein. So kann ein Gehäuse oder eine Anordnung aus Gehäusen so montiert werden, dass dieses bzw. diese als Einheit verschiebbar oder an eine Aufnahme für die Basisschienen montierbar ist

Ein erstes Befestigungselement könnte zwei übereinanderliegende Gehäuse und deren übereinanderliegende und/ oder kolinear angeordnete Adapter verbinden. So können Gehäuse problemlos übereinander gestapelt werden. Die Adapter übernehmen eine Zentrierfunktion und versteifen die Gehäuse.

Ein zweites Befestigungselement könnte zwei nebeneinander liegende Gehäuse und deren nebeneinander und/ oder parallel liegende Adapter verbinden. So können Gehäuse bevorzugt in einer Ebene liegend nebeneinander angeordnet werden.

Das zweite Befestigungselement könnte zwei nebeneinander liegende Gehäuse durch ein Abstandselement voneinander beabstanden. So kann ein Zwischenraum für Kabel, Stecker oder Schutzisolationen geschaffen werden.

Der Adapter könnte als Trägerschiene ausgestaltet sein, auf den ein Befestigungselement aufsetzbar ist. Eine Schiene kann das Befestigungselement in Längsrichtung gut führen, so dass auch vertikale Abstände zwischen Gehäusen und/ oder einer Basisschiene einstellbar sind.

Der Adapter und das Befestigungselement könnten zumindest im Bereich ihrer Anlage aneinander im Querschnitt U- oder V- förmig ausgebildet sein. Hierdurch sind die Befestigungselemente nur in Längsrichtung verschiebbar, aber gegen eine Seitenverschiebung gesichert.

Eine Anordnung, könnte mindestens zwei Gehäuse der hier beschriebenen Art umfassen, wobei die Anordnung mindestens eine Basisschiene, bevorzugt jedoch zwei Basisschienen, aufweist, durch welche die Anordnung an einem Boden, einer Montagewand oder einer
anderen Einrichtung als Ganzes anordenbar ist. Die gesamte Anordnung, welche mehrere Gehäuse umfasst, könnte auf Basisschienen befestigt sein. So kann die gesamte Anordnung fixiert werden.

Vor diesem Hintergrund besteht ein Bedarf nach einem Gehäuse, insbesondere Batteriegehäuse, das möglichst leicht zu fertigen, umzurüsten oder zu modifizieren ist, um im Fall einer Havarie oder des Auftretens einer exothermen Reaktion Stand zu halten.

Daher könnte eine Isolierverkleidung, welche mindestens zwei Schichten umfasst, als Ganzes an eine innere Wandung eines Gehäuses, insbesondere Batteriegehäuses, angebracht sein. Es müssen keine körnigen Materialien in aufwendiger Weise an eine innere Wandung angebracht werden. Ein thermisch aktivierbares Material, welches unter Einwirkung von Wärme und/ oder Hitze und/ oder Feuer sein Volumen verändert, verändert durch seine Expansion den Wärmeleitwert der gesamten Isolierverkleidung in günstiger Weise. Der Wärmeleitwert wird erfindungsgemäß reduziert.

Die Expansion verkleinert das freie Volumen des Innenraums eines Gehäuses, insbesondere Batteriegehäuses, vorteilhaft. Hierdurch wird das effektiv zur Verfügung stehende Brandvolumen verkleinert. Insoweit ist ein effektiver flammhemmender Aufbau innerhalb eines Gehäuses, insbesondere Batteriegehäuses, relativ problemlos erzeugbar.

Es könnte eine dritte Schicht vorgesehen sein, wobei die zweite Schicht zwischen der ersten Schicht und der dritten Schicht sandwichartig aufgenommen ist. Eine dritte Schicht kann durch die Expansion des thermisch aktivierbaren Materials von der ersten Schicht beabstandet werden. Die erste und die dritte Schicht werden insoweit thermisch voneinander entkoppelt, indem diese im Fall einer Havarie oder des Auftretens einer exothermen Reaktion räumlich voneinander beabstandet werden.

Mindestens eine Schicht könnte als Gewebe oder Matte ausgestaltet sein, welche Mineralfasern und/ oder nicht brennbare Fasern aufweist. Ein Gewebe oder eine Matte, die auch nicht gewoben sein kann, bildet eine gute Unterlage zum verliersicheren Aufbringen des thermisch aktivierbaren Materials. Das thermisch aktivierbare Material kann so leicht verarbeitet und an räumliche Gegebenheiten angepasst werden. Denkbar ist beispielsweise, das Gewebe oder die Matten zuzuschneiden, nachdem diese mit dem thermisch aktivierbaren Material beschichtet wurden.

Die erste Schicht könnte als Gewebe oder Matte aus Glasfasern oder hochtemperaturbeständigen Materialien ausgestaltet sein und die dritte Schicht oder weitere Schichten könnte bzw. könnten ebenfalls als Gewebe oder Matte aus Glasfasern oder hochtemperaturbeständigen Materialien ausgestaltet sein. Glasfasern sind wärmebeständig und/ oder brand- und/ oder hitzebeständig und gut verarbeitbar.

Mindestens eine dem Gehäuseinnenraum zugewandte Schicht könnte elektrisch nicht leitend sein. Alternativ oder zusätzlich könnte diese Schicht als elektrisch nicht leitende Folie ausgestaltet sein. Hierdurch ist sichergestellt, dass zwischen Batterien und der Isolierverkleidung kein elektrisch leitender Kontakt hergestellt wird, wenn das Gehäuse als Batteriegehäuse verwendet wird.

Das thermisch aktivierbare Material könnte als intumeszierendes Material ausgestaltet sein. Intumeszierendes Material zeigt ein besonders gutes Expansionsverhalten. Eine intumeszierende Schicht reagiert unter Wärmeeinwirkung und/ oder Feuereinwirkung und ist daher thermisch aktivierbar. Sie reagiert indem sie um ein Mehrfaches ihrer ursprünglichen Schichtdicke aufquillt. Hierbei baut die Schicht eine isolierende Schutzlage durch Verkohlung auf. Die Schicht, bzw. die Trägerschicht, auf der sie aufliegt, wird gegen Wärme- und/ oder Feuereinwirkung geschützt.

Im Gegensatz zu Brandschutzplatten oder aufspritzbaren Systemen auf Zementbasis, kann eine intumeszierende Schicht oder ein intumeszierender Lack dekorativ und schützend genutzt werden. Eine Konstruktion, auf welche die Schicht aufgetragen wird, wird nicht ungünstig beeinträchtigt.

Eine Intumeszenz wird üblicherweise durch mindestens drei Komponenten erreicht. Die erste Komponente ist eine Kohlenstoffquelle, wie beispielsweise Pentaerythrit oder Dipentaerythrit. Die zweite Komponente ist ein Treibmittel, wie beispielsweise Melamin und festes Chlorparaffin. Die dritte Komponente ist ein Mineralsäure-Katalysator, wie beispielsweise Ammoniumpolyphosphat.

Sobald eine intumeszierende Schicht erwärmt oder erhitzt wird, laufen mehrere chemische Reaktionen ab. Ammoniumpolyphosphat zerfällt und erzeugt Phosphorsäure. Phosphorsäure bewirkt eine Dehydratisierung von Pentaerythrit oder Dipentaerythrit und erzeugt eine kohlenstoffhaltige Lage. Das Treibmittel zerfällt unter Freisetzung von nicht brennbaren Gasen. Die Gase führen zur Aufschäumung der kohlenstoffhaltigen Lage. Hierdurch wird eine Schaumstruktur gebildet, die als Wärmeisolator hochwirksam ist.

Als intumeszierende Materialien, die beispielsweise ab ca. 200 bis 250 °C reagieren, indem sie um ein Mehrfaches ihrer ursprünglichen Schichtdicke aufquellen seien Blähgraphit und Vermikulit genannt.

Es könnten mehrere Schichten mit thermisch aktivierbarem Material vorgesehen sein. Hierdurch ist eine besonders starke Expansion bzw. Volumenzunahme der Isolierverkleidung ermöglicht.

Es könnten zwei Schichten mit thermisch aktivierbarem Material durch mindestens ein Gewebe oder eine Matte getrennt sein, wobei das Gewebe oder die Matte Mineralfasern und/ oder nicht brennbare Fasern aufweist. So können die trennenden Gewebe oder Matten zusätzlich als Wärmeisolatoren wirken und gleichzeitig die aufgequollenen Materialien gegen ein Zerfallen stabilisieren

Es könnte ein Klebemittel vorgesehen sein, mittels welchem die Isolierverkleidung an einer Wandung fixierbar ist, wobei das Klebemittel einer äußeren Schicht der Isolierverkleidung zugeordnet ist oder wobei das Klebemittel als eigenständige Lage ausgestaltet ist. Durch ein Klebemittel ist die Isolierverkleidung besonders vollflächig einer Wandung eines Gehäuses, insbesondere Batteriegehäuses, zuordenbar.

Vor diesem Hintergrund könnte das Klebemittel selbstklebend ausgestaltet sein. Alternativ oder zusätzlich könnte das Klebemittel als Hochtemperaturkleber ausgestaltet sein. Ein selbstklebendes Klebemittel erlaubt ein besonders schnelles Anordnen der Isolierverkleidung an der Wandung. Ein Hochtemperaturkleber hält die Isolierverkleidung auch nach längerer Branddauer noch zuverlässig an der Wandung fest.

Ein Gehäuse, welches mindestens eine innere Wandung umfasst, könnte eine Isolierverkleidung der hier beschriebenen Art aufweisen, wobei die Isolierverkleidung an der inneren Wandung angeordnet ist.

Ein solches Gehäuse, welches bevorzugt aus Aluminium, Stahl, Kunststoff oder Hochtemperaturkunststoff, gefertigt ist, ist effektiv gegen einen Fall einer Havarie oder des Auftretens einer exothermen Reaktion, von innen und von außen, geschützt. Das Gehäuse ist auf keine bestimmte Anwendung beschränkt und kann aus jeglichem geeigneten Material gefertigt sein.

Bevorzugt wird das Gehäuse in Fahrzeugen, insbesondere Kraftfahrzeugen, verwendet. Das Gehäuse kann in einem Automobil verwendet werden. Denkbar ist auch, das Gehäuse auf Booten, Schiffen oder Schwimmkränen zu verwenden. Das Gehäuse kann jedoch auch in Gebäuden, insbesondere im Hausbereich oder der Hautechnik, oder in anderen stationären Einrichtungen verwendet werden.

Das Gehäuse könnte als Batteriegehäuse ausgestaltet sein. Im Gehäuseinnenraum des Batteriegehäuses sind Batterien anordenbar oder aufgenommen.

Das Gehäuse könnte einen Deckel aufweisen, an dessen innerer Wandung die Isolierverkleidung angeordnet ist. Im Brand- oder Havariefall reagiert die Isolierverkleidung an definierten Dichtkanten und dichtet zumindest über einen gewissen Zeitraum ab. Vor diesem Hintergrund könnte ein Schenkel einer Wand des Gehäuses unter Ausbildung einer Dichtkante oder einer Dichtfläche an der Isolierverkleidung anliegen. Im geschlossenen Zustand des Gehäuses presst dann der Schenkel gegen die im Brandfall intumeszierende oder intumeszierte Isolierverkleidung.

Zwischen einem Randbereich oder Randwulst des Deckels und einer Anlagefläche einer Wand des Gehäuses könnte eine IP-Dichtung angeordnet sein. Alternativ oder zusätzlich könnte die IP-Dichtung im Gehäuse verklemmt oder verschraubt sein. Eine IP-Dichtung soll die Schutzklasse IP67 erfüllen und gegen Staub und Wasser abdichten.

Die IP-Dichtung kann aus einem Elastomer gefertigt sein. Wenn im Brandfall die IP-Dichtung zerstört oder zersetzt wird, kann die hier beschriebene Isolierverkleidung Dichtungsaufgaben übernehmen.

Das Gehäuse könnte mindestens ein Ventil zum Druckausgleich und/ oder Drucküberlastabbau aufweisen, welches ein intumeszierendes Material zum Verschließen einer Fluidleitung aufweist. Alternativ oder zusätzlich könnte das Gehäuse mindestens eine Kabeldurchführung aufweisen, welche ein intumeszierendes Material zum Verschließen eines Durchbruchs für ein Kabel aufweist. Ein Ventil zum Druckausgleich und/ oder Drucküberlastabbau kann Überdrücke im Inneren des Batteriegehäuses durch eine Fluidleitung in die Atmosphäre abbauen. Bevorzugt weist ein Ventil zum Druckausgleich und/ oder Drucküberlastabbau ein intumeszierendes Material auf, welches im Brandfall die Fluidleitung verschließt. Eine Kabeldurchführung kann ein Kabel von einer Kammer innerhalb des Gehäuses durch eine Kammerwand in eine andere Kammer führen. Eine Kabeldurchführung kann auch durch eine Außenwand eines Batteriegehäuses führen. Bevorzugt umfasst die Kabeldurchführung einen Dichtkörper, der einen Durchgang für das Kabel aufweist, wobei der Dichtkörper ein intumeszierendes Material aufweist oder aus einem solchen Material gefertigt ist. Im Brandfall kann der Dichtkörper den Durchbruch durch die Kammerwand oder Außenwand für das zersetzte oder verbrannte Kabel während eines gewissen Zeitraums feuerfest verschließen.

In der Zeichnung zeigen
- Fig. 1: eine schematische Ansicht einer Isolierverkleidung, welche zwei Schichten aufweist, wobei einer äußeren Schicht zur Anlage an eine Wandung ein Klebemittel zugeordnet ist,
- Fig. 2: eine schematische Ansicht einer Isolierverkleidung, die drei Schichten aufweist, wobei zwei Gewebe aus Glasfasern eine mittlere Schicht mit thermisch aktivierbarem Material zwischen sich sandwichartig einschließen,
- Fig. 3: eine schematische Ansicht einer Isolierverkleidung, welche zwei Schichten mit thermisch aktivierbarem Material aufweist, die voneinander durch ein Gewebe aus Glasfasern getrennt sind,
- Fig. 4: eine schematische Ansicht eines Gehäuses mit einer inneren Wandung, an der eine Isolierverkleidung angeordnet ist,
- Fig. 5: ein Batteriegehäuse, welches Ventile zum Druckausgleich und/ oder Drucküberlastabbau und eine Kabeldurchführung aufweist,
- Fig. 6: eine Detailansicht der Kabeldurchführung gemäß Fig. 5,
- Fig. 7: eine Detailansicht eines Ventils zum Druckausgleich und/ oder Drucküberlastabbau gemäß Fig, 5,
- Fig. 8: eine Schnittansicht eines Deckels, dem eine Isolierverkleidung zugeordnet ist,
- Fig. 9: eine Schnittansicht eines weiteren Deckels, dem eine Isolierverkleidung zugeordnet ist,
- Fig. 10: eine Anordnung, welche vier Gehäuse umfasst, wobei je zwei Gehäuse übereinander angeordnet sind und sich je zwei Gehäuse in einer Ebene lateral beabstandet gegenüberliegen,
- Fig. 11: eine Seitenansicht auf die Längsseite der Anordnung gemäß Fig. 10,
- Fig. 12: eine Seitenansicht auf die Querseite der Anordnung gemäß Fig. 10,
- Fig. 13: eine Draufsicht auf die Anordnung gemäß Fig. 10.
- Fig. 14: eine Anordnung, bei der die Basisschienen oben angeordnet sind, so dass die Anordnung an einem Unterboden angeordnet werden kann und von diesem nach unten abragt oder abhängt,
- Fig. 15: eine Seitenansicht auf die Längsseite der Anordnung gemäß Fig. 14,
- Fig. 16: eine Seitenansicht auf die Querseite der Anordnung gemäß Fig. 14.
- Fig. 17: eine Anordnung, bei der die Basisschienen seitlich und im Wesentlichen orthogonal zu einem Boden oder einer Ebene angeordnet sind, so dass die Anordnung an einer Montagewand angeordnet werden kann und von dieser in einen Raum absteht,
- Fig. 18: eine weitere Anordnung, bei der die Basisschienen seitlich angeordnet sind, so dass die Anordnung an einer Montagewand angeordnet werden kann,
- Fig. 19: eine perspektivische Teilansicht eines Gehäuses, in dem ein Ventil des Stands der Technik verbaut ist, wobei das Ventil eine nicht hochtemperaturbeständige metallische Einfassung und eine aufgeklebte Druckausgleichsmembran umfasst,
- Fig. 20: eine perspektivische Teilansicht des Gehäuses gemäß Fig. 19 von innen, wobei in oder an der äußeren Wandung des Gehäuses ein Ventil verbaut ist, welches eine intumeszierende Dichtung aufweist,
- Fig. 21: eine Schnittansicht eines Ventils gemäß Fig. 20, welches an oder in einer äußeren Wandung des Gehäuses verbaut ist und eine intumeszierende Dichtung und eine perforierte Metallfolie aufweist, und
- Fig. 22: eine schematische Ansicht des Druckabbaus im Brand- oder Havariefall.

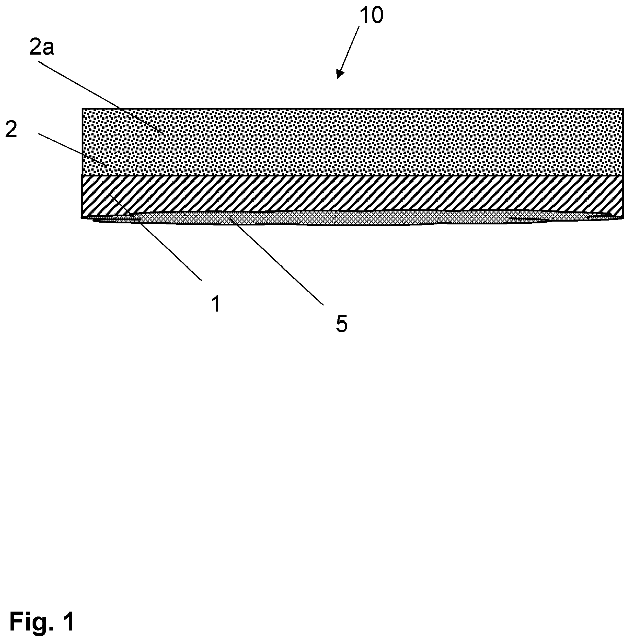

Fig. 1 zeigt eine Isolierverkleidung 10 zum Ausrüsten eines Gehäuses 6, umfassend mindestens zwei Schichten, wobei eine erste Schicht 1 mit einer zweiten Schicht 2 verbunden ist und wobei die zweite Schicht 2 ein thermisch aktivierbares Material 2a aufweist. Das thermisch aktivierbare Material 2a verändert unter Einwirkung von Wärme und/ oder Hitze und/ oder Feuer sein Volumen.

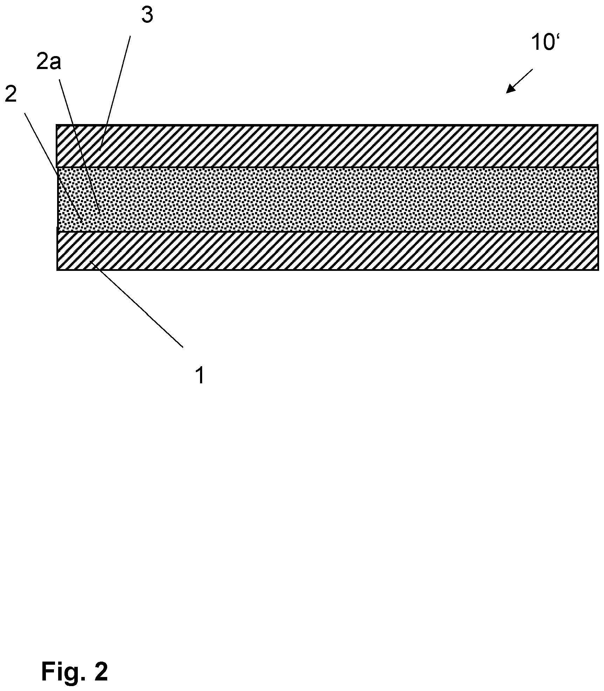

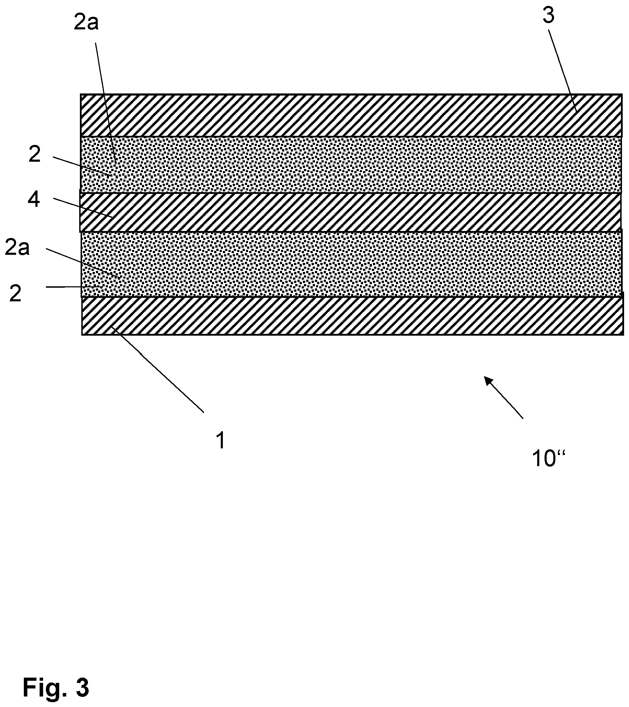

Fig. 2 und 3 zeigen je eine weitere Isolierverkleidung 10', 10", bei der eine dritte Schicht 3 vorgesehen ist, wobei die zweite Schicht 2 zwischen der ersten Schicht 1 und der dritten Schicht 3 sandwichartig aufgenommen ist.

Mindestens eine Schicht 1, 3 ist als Gewebe ausgestaltet, welches Mineralfasern und nicht brennbare Fasern aufweist. Konkret ist in Fig. 1 und Fig. 2 die erste Schicht 1 als Gewebe aus Glasfasern ausgestaltet und ist in Fig. 2 auch die dritte Schicht 3 als Gewebe aus Glasfasern ausgestaltet.

In den Fig. 1 bis 3 ist das thermisch aktivierbare Material 2a als intumeszierendes Material ausgestaltet.

Es können auch mehrere Schichten 2 mit thermisch aktivierbarem Material 2a vorgesehen sein. Dies ist in Fig. 3 dargestellt. In Fig. 3 sind zwei Schichten 2 mit thermisch aktivierbarem Material 2a durch mindestens eine weitere Schicht 4, nämlich ein Gewebe, getrennt, wobei das Gewebe Mineralfasern und nicht brennbare Fasern, nämlich Glasfasern aufweist.

In Fig. 1 ist ein Klebemittel 5 vorgesehen, mittels welchem die Isolierverkleidung 10 an einer Wandung fixierbar ist, wobei das Klebemittel 5 einer äußeren Schicht, nämlich der ersten Schicht 1, der Isolierverkleidung 10 zugeordnet ist.

Das Klebemittel 5 ist selbstklebend ausgestaltet und als Hochtemperaturkleber ausgestaltet.

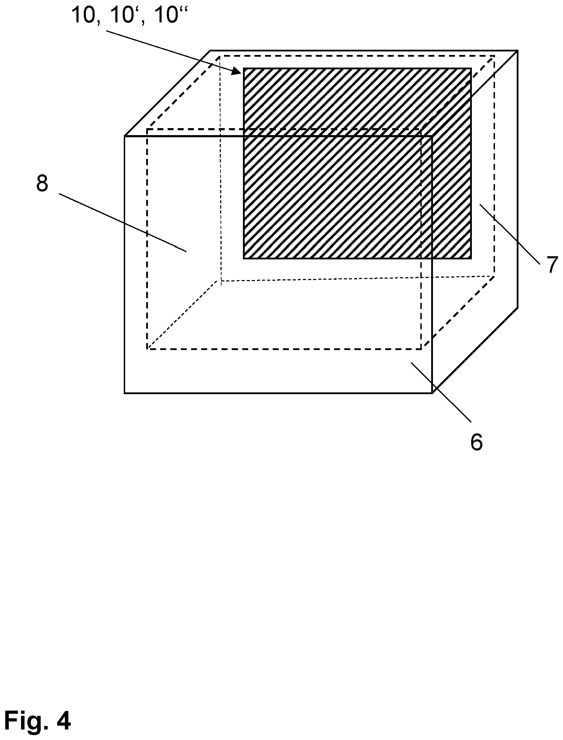

Fig. 4 zeigt ein Gehäuse 6, umfassend mindestens eine innere Wandung 7, wobei an der inneren Wandung 7 eine Isolierverkleidung angeordnet ist. Die Isolierverkleidung kann nach Art der in Fig. 1 bis 3 gezeigten Isolierverkleidungen 10, 10', 10" gefertigt sein. Das Gehäuse 6 ist aus Aluminium gefertigt, kann jedoch auch aus Stahl, Kunststoff oder Hochtemperaturkunststoff gefertigt sein.

Das Gehäuse 6 ist lediglich schematisch dargestellt und kann in vielen Bereichen Verwendung finden.

Bevorzugt ist das Gehäuse 6 jedoch als Batteriegehäuse ausgestaltet.

In diesem Verwendungsfall ist eine dem Gehäuseinnenraum 8 zugewandte Schicht 3 einer Isolierverkleidung elektrisch nicht leitend. Beispielhaft könnte die Isolierverkleidung 10' gemäß Fig. 2 oder die Isolierverkleidung 10" gemäß Fig. 3 so angeordnet sein, dass ihre dritte Schicht 3 nicht leitend ist und dem Gehäuseinnenraum 8 zugewandt ist, in welchem Batterien angeordnet sind.

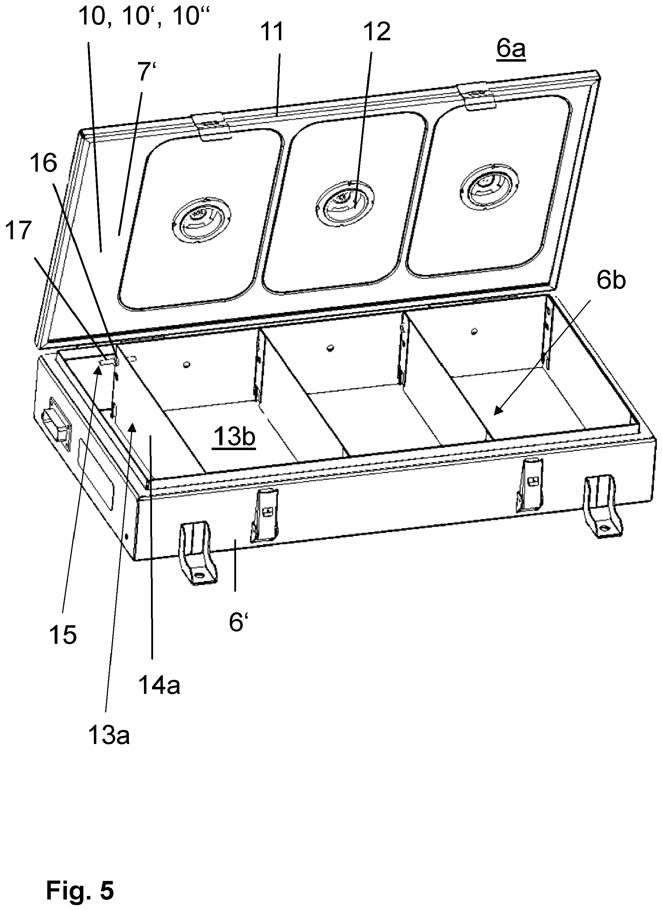

Fig. 5 zeigt, dass ein Gehäuse 6' einen Deckel 11 aufweist, an dessen innerer Wandung 7' die Isolierverkleidung 10, 10', 10" angeordnet ist.

Fig. 5 zeigt konkret ein Batteriegehäuse, welches einen Deckel 11 aufweist, in dem Ventile 12 zum Druckausgleich und/ oder Drucküberlastabbau angeordnet sind. Ein Ventil 12 zum Druckausgleich und/ oder Drucküberlastabbau kann Überdrücke im Inneren 6b des Batteriegehäuses durch eine Fluidleitung in die Atmosphäre 6a abbauen und weist ein intumeszierendes Material auf, welches im Brandfall die Fluidleitung verschließt. Die dem Inneren 6b zugewandte Seite des Deckels 11 ist mit einer Isolierverkleidung 10, 10', 10" versehen. So kann die Qualität des Brandschutzes noch weiter verbessert werden.

Das Innere 6b des Batteriegehäuses ist in Kammern 13a, 13b unterteilt, die durch Kammerwände 14a voneinander abgetrennt sind. In den Kammern 13a, 13b sind nicht gezeigte Batteriezellen angeordnet.

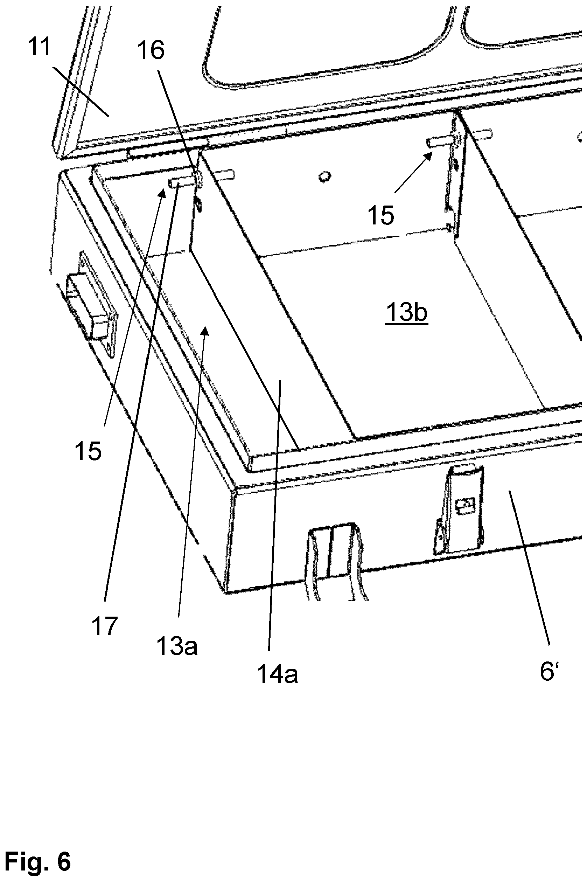

Fig. 5 und 6 zeigen, dass eine Kabeldurchführung 15 des Batteriegehäuses einen Dichtkörper 16 umfasst, der einen Durchgang für ein Kabel 17 oder eine Leitung aufweist. Fig. 5 zeigt mit Bezug zur Kammerwand 14a, dass der Dichtkörper 16 ein intumeszierendes Material aufweist oder aus einem solchen Material gefertigt ist. Im Brandfall kann der Dichtkörper 16 den Durchbruch durch die Kammerwand 14a für das zersetzte oder verbrannte Kabel 17 feuerfest verschließen.

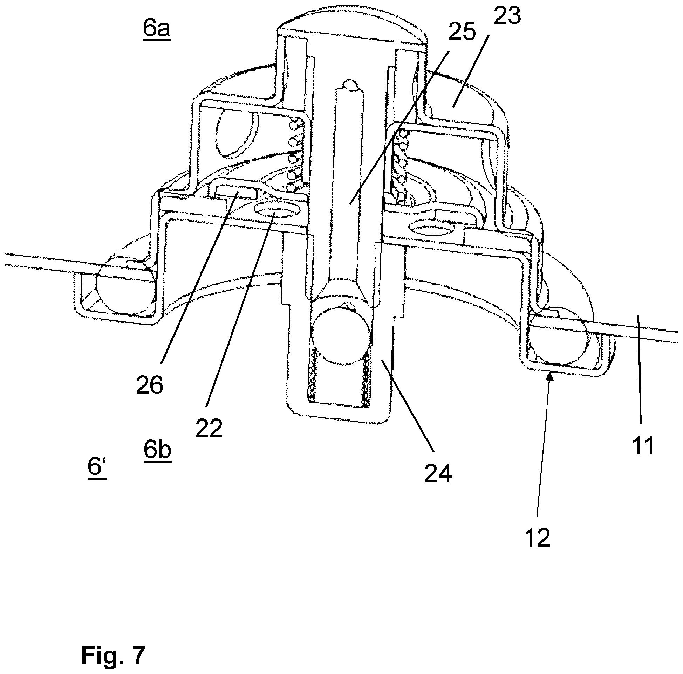

Fig. 7 zeigt, dass das Batteriegehäuse einen Deckel 11 aufweist, in dem mindestens ein Ventil 12 zum Druckausgleich und/ oder Drucküberlastabbau angeordnet ist.

Das Ventil 12 zum Druckausgleich und/ oder Drucküberlastabbau kann Überdrücke im Inneren 6b des Batteriegehäuses durch eine Fluidleitung 22 in die Atmosphäre 6a abbauen und weist eine gegen eine Federkraft abhebbare Dichtung 26 aus intumeszierendem Material auf, welches im Brandfall die Fluidleitung 22 verschließt.

Fig. 7 zeigt konkret ein Ventil 12 zum Druckausgleich und/ oder Drucküberlastabbau für das Batteriegehäuse, umfassend ein Gehäuse mit einem der Atmosphäre 6a zugewendeten ersten Abschnitt 23 und einem dem Inneren 6b des Batteriegehäuses zugewendeten zweiten Abschnitt 24, wobei die beiden Abschnitte 23, 24 absperrbar fluidleitend miteinander verbunden sind.

Es ist mindestens ein Teilventil vorgesehen, welches thermisch aktivierbar ist, um eine druckabbauende Fluidleitung 22 zwischen dem ersten Abschnitt 23 und dem zweiten Abschnitt 24 im Brandfall abzusperren.

Konkret ist ein erstes Teilventil vorgesehen, welches thermisch aktivierbar ist, um eine erste, druckausgleichende Fluidleitung 25 zwischen dem ersten Abschnitt 23 und dem zweiten Abschnitt 24 abzusperren.

Konkret ist des Weiteren ein zweites Teilventil vorgesehen, welches thermisch aktivierbar ist, um eine zweite, druckabbauende Fluidleitung 22 zwischen dem ersten Abschnitt 23 und dem zweiten Abschnitt 24 abzusperren.

Die erste Fluidleitung 25 ist im Normalbetrieb permanent zum Druckausgleich zwischen Atmosphäre 6a und dem Inneren 6b des Batteriegehäuses geöffnet und nur durch thermische Beaufschlagung verschließbar. Die zweite Fluidleitung 22 wird im Brandfall verschlossen und ist im Normalfall durch Freigeben eines Dichtsitzes zum Abbau höherer Drücke freigebbar.

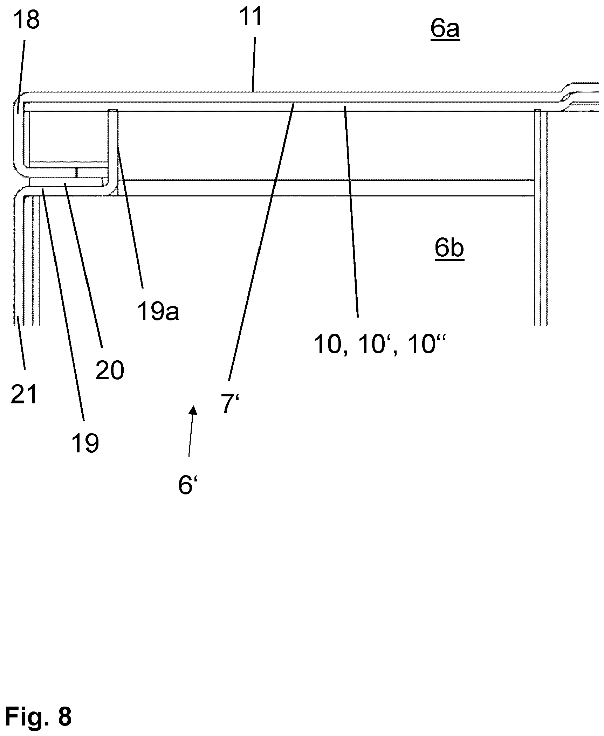

Fig. 8 zeigt, dass zwischen einem Randbereich oder Randwulst 18 des Deckels 11 und einer Anlagefläche 19 einer Wand des Gehäuses 6' eine IP-Dichtung 20 angeordnet ist. Die IP-Dichtung 20 ist im Gehäuse 6' verklemmt. Die IP Dichtung 20 kann auch eingeklebt oder in anderer Weise befestigt sein.

Konkret ist der Deckel 11 im Randbereich U-förmig gebogen, so dass ein Schenkel des U die IP-Dichtung 20 gegen die Anlagefläche 19 pressen kann, die Anlagefläche 19 ist als Plateau einer S-förmigen Oberkante einer Wand 21, hier einer Außenwand des Gehäuses 6', ausgestaltet.

Von der Anlagefläche 19 der Wand 21 ragt nach oben in Richtung Deckel 11 ein Schenkel 19a ab, der die IP-Dichtung 20 von der Isolierverkleidung 10, 10', 10" abtrennt und an der Isolierverkleidung 10, 10', 10" unter Ausbildung einer Dichtkante anliegt.

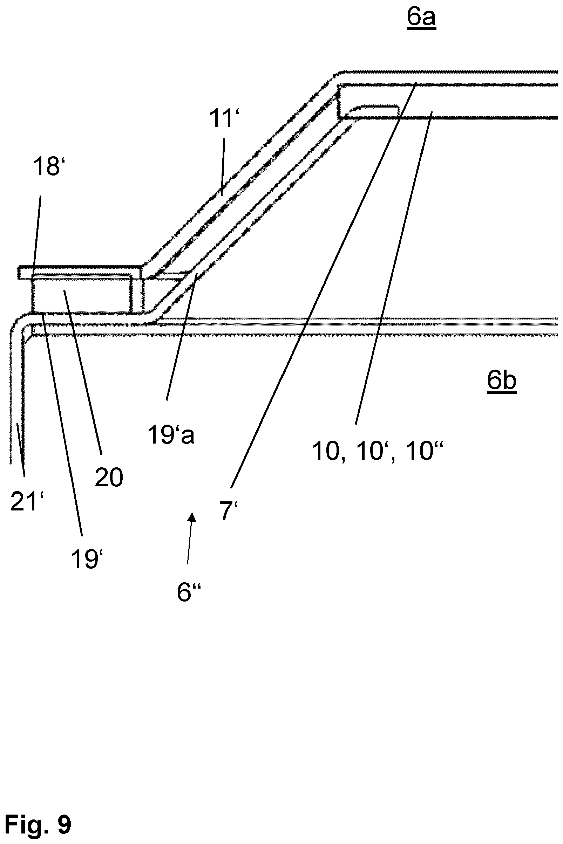

Fig. 9 zeigt, dass zwischen einem Randbereich 18' eines weiteren Deckels 11' und einer Anlagefläche 19' einer Wand 21' eines weiteren Gehäuses 6" eine IP-Dichtung 20 angeordnet ist. Die IP-Dichtung 20 ist im Gehäuse 6" verklemmt. Die IP Dichtung 20 kann auch eingeklebt oder in anderer Weise befestigt sein.

Von der Anlagefläche 19' der Wand 21' ragt nach oben in Richtung Deckel 11' ein Schenkel 19'a ab, der an der Isolierverkleidung 10, 10', 10" unter Ausbildung einer Dichtkante oder einer Dichtfläche anliegt. Durch den Schenkel 19'a der Wand 21', den Deckel 11', die IP-Dichtung 20 und die Isolierverkleidung 10, 10', 10" wird ein Hohlraum gebildet. Der Deckel 11' ist an seinem Rand abschnittsweise parallel zur Anlagefläche 19' und dem Schenkel 19'a ausgebildet.

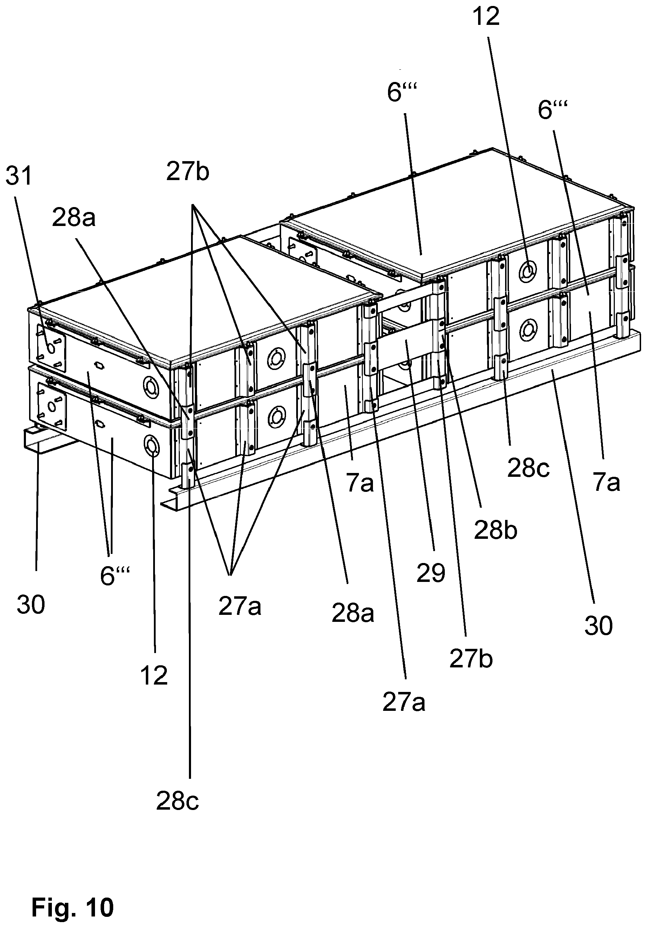

Fig. 10 zeigt ein Gehäuse 6'" zur Aufnahme von Batterien, nämlich ein Batteriegehäuse, umfassend einen Gehäuseinnenraum und mindestens eine äußere Wandung 7a.

Das Gehäuse 6'" ist im Inneren bevorzugt so ausgebildet, wie in dieser Beschreibung mit Bezug zu den anderen Gehäusen 6, 6', 6" beschrieben. Insoweit sind die technischen Merkmale der Gehäuse 6, 6', 6" mit den technischen Merkmalen des Gehäuses 6'" beliebig kombinierbar.

Der äußeren Wandung 7a des Gehäuses 6'" ist mindestens ein Adapter 27a, 27b zum Anbinden eines weiteren Gehäuses 6'" zugeordnet, um die Gehäuse 6'" übereinander und nebeneinander lagesicher anzuordnen oder zu fixieren. Der äußeren Wandung 7a des Gehäuses 6'" ist außerdem mindestens ein Adapter 27a, 27b zum Anbinden einer Basisschiene 30 zugeordnet.

Konkret ist in Fig. 10 dargestellt, dass vier Gehäuse 6'" angeordnet sind, wobei je zwei Gehäuse 6'" übereinander angeordnet sind und sich je zwei Gehäuse 6'" in einer Ebene liegend gegenüberliegen.

Jeder Adapter 27a, 27b weist Schraubmittel auf, um zwei Gehäuse 6'" aneinander anzubinden. Konkret sind jedem Adapter 27a, 27b zwei Muttern zugeordnet.

In Fig. 10 ist ein erster Adapter 27a eines ersten, unteren Gehäuses 6'" durch ein Befestigungselement 28a, 28b mit einem zweiten Adapter 27b eines zweiten, oberen Gehäuses 6"', aber auch eines seitlich benachbarten Gehäuses 6'" verbindbar und verbunden.

Ein erstes Befestigungselement 28a verbindet zwei übereinanderliegende Gehäuse 6'" und deren übereinanderliegende und kolinear angeordnete Adapter 27a, 27b. Dies ist links in Fig. 10 anhand entsprechender Bezugszeichen dargestellt.

Ein zweites Befestigungselement 28b verbindet zwei nebeneinander liegende Gehäuse 6'" und deren nebeneinander und parallel liegende Adapter 27a, 27b. Dies ist rechts bzw. mittig in Fig. 10 dargestellt.

Das zweite Befestigungselement 28b beabstandet zwei nebeneinander liegende Gehäuse 6'" durch ein Abstandselement 29 oder einen Abstandsabschnitt lateral voneinander.

Ein Adapter 27a eines unteren Gehäuses 6'" ist durch ein drittes Befestigungselement 28c mit einer Basisschiene 30 verbunden.

Der Adapter 27a, 27b ist als Trägerschiene ausgestaltet, auf den ein Befestigungselement 28a, 28b, 28c aufsetzbar ist. Der Adapter 27a, 27b und das Befestigungselement 28a, 28b, 28c sind zumindest im Bereich ihrer Anlage aneinander im Querschnitt U-förmig ausgebildet. Das zweite Befestigungselement 28b weist beidseits des Abstandselements 29 schienenartige Ansatzstücke auf, die ebenfalls im Querschnitt U-förmig sind und auf die Adapter 27a und 27b aufsetzbar sind.

Die Gehäuse 6'" ruhen bzw. stehen auf zwei Basisschienen 30. Die Basisschienen 30 sind bevorzugt U-förmig.

Die Gehäuse 6'" sind identisch ausgebildet, so dass diese poblemlos nach Art eines Baukastensystems miteinander kombinierbar sind.

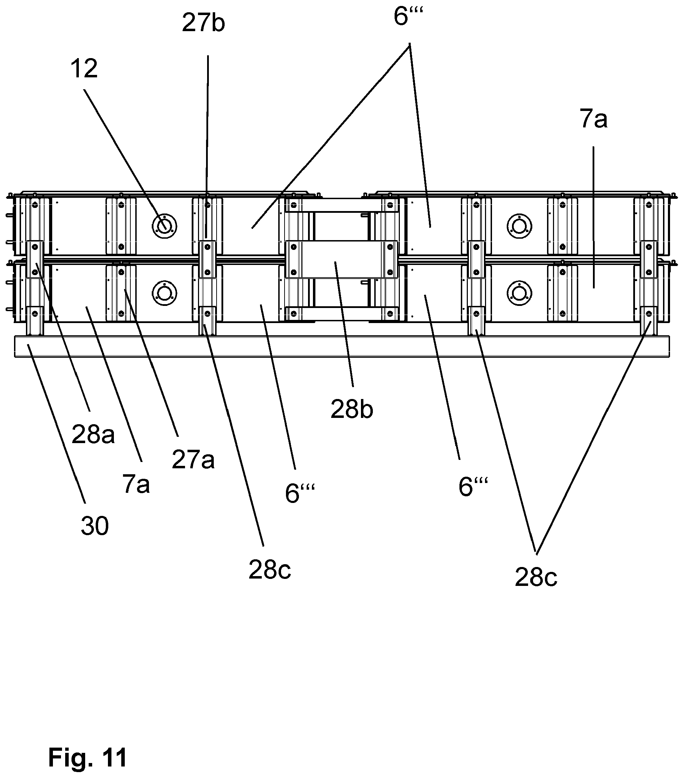

Fig. 11 zeigt eine Seitenansicht auf die Längsseite der Anordnung gemäß Fig. 10. Es ist dargestellt, dass dritte Befestigungselemente 28c die Gehäuse 6'" an die Basisschienen 30 anbinden. Die dritten Befestigungselemente 28c sind auf die Adapter 27a der unteren Gehäuse 6'" aufgesetzt und mit diesen und den Basisschienen 30 verschraubt.

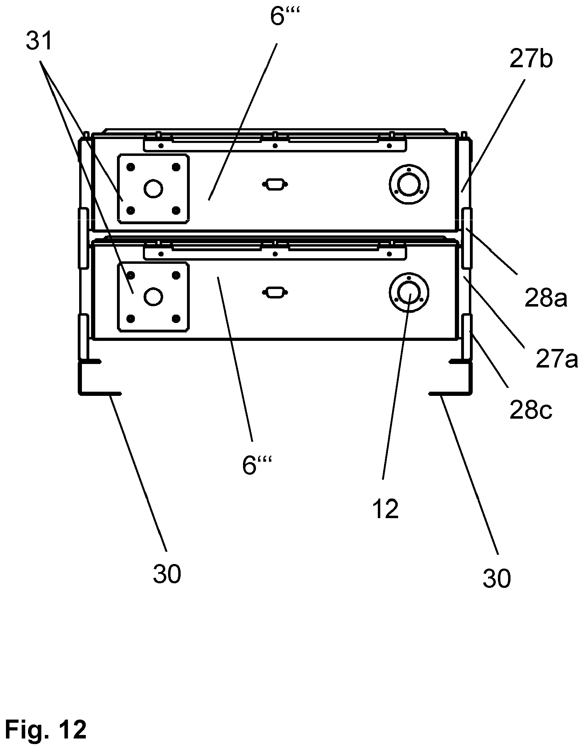

Fig. 12 zeigt eine Seitenansicht auf die Querseite der Anordnung gemäß Fig. 10. Es ist dargestellt, dass Steckanschlüsse 31 für Stecker vorgesehen sind.

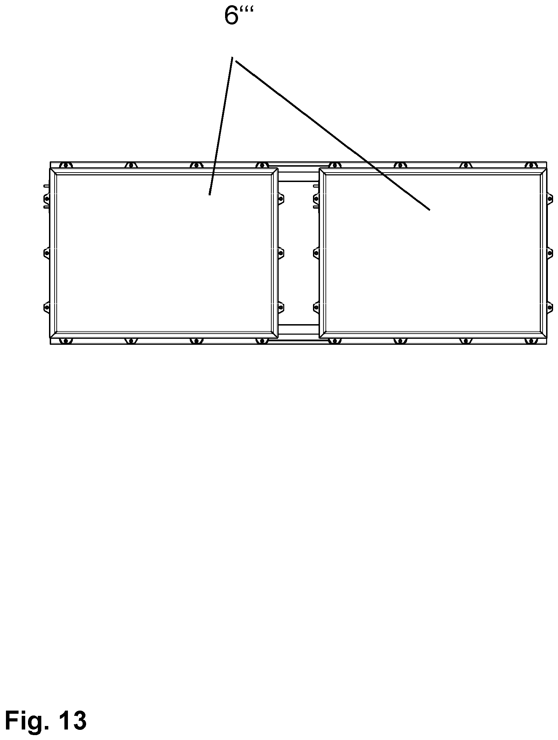

Fig. 13 zeigt eine Ansicht auf die Anordnung von oben, nämlich auf die den Basisschienen 30 abgewandte Seite.

Die Basisschienen 30 dienen als statische Befestigungsschienen, so dass die hier beschriebene Anordnung aus Gehäusen 6'" in verschiedener Weise befestigt werden kann. Die Basisschiene 30 kann auch als Linearführungsschiene ausgestaltet sein, so dass die gesamte Anordnung in eine bestehende Aufnahmeeinrichtung eingeschoben werden kann. So kann auf relativ engem Bauraum ein hohes Maß an Zugänglichkeit und Servicefreundlichkeit in Bezug auf die Gehäuse 6'" erreicht werden. Konkret ist denkbar, dass die Basisschienen 30 auf schienenartige Aufnahmeelemente aufgeschoben werden bzw. sind.

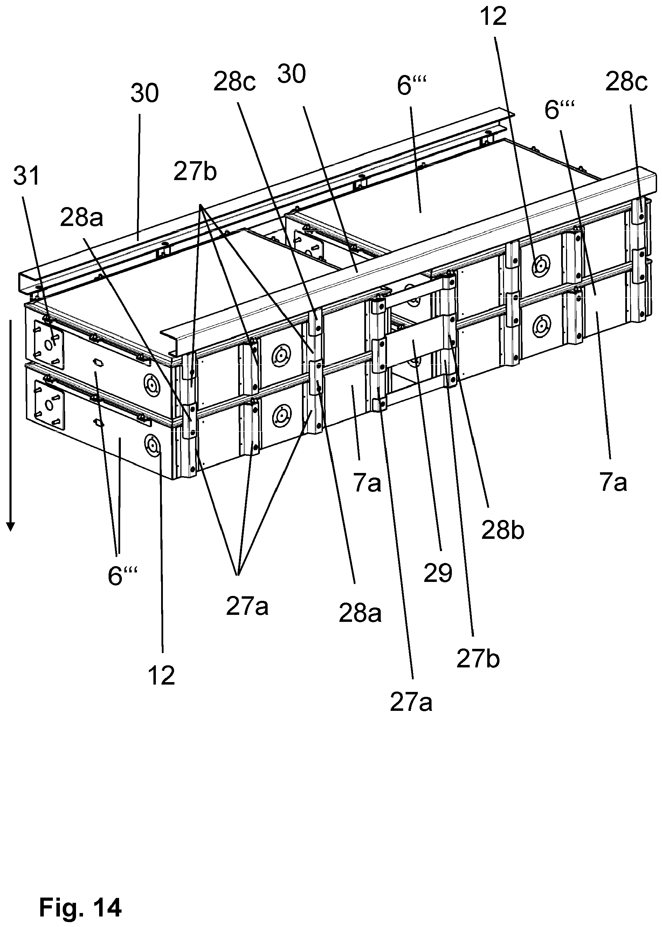

Fig. 14 zeigt eine Anordnung, bei der die Basisschienen 30 oben an einem Gehäusepack bzw. einer Anordnung angeordnet sind, so dass die gesamte Anordnung aus Gehäusen 6'" beispielsweise an einem Unterboden, insbesondere eines Kraftfahrzeugs, angeordnet werden kann und von diesem Unterboden nach unten in Pfeilrichtung abragt.

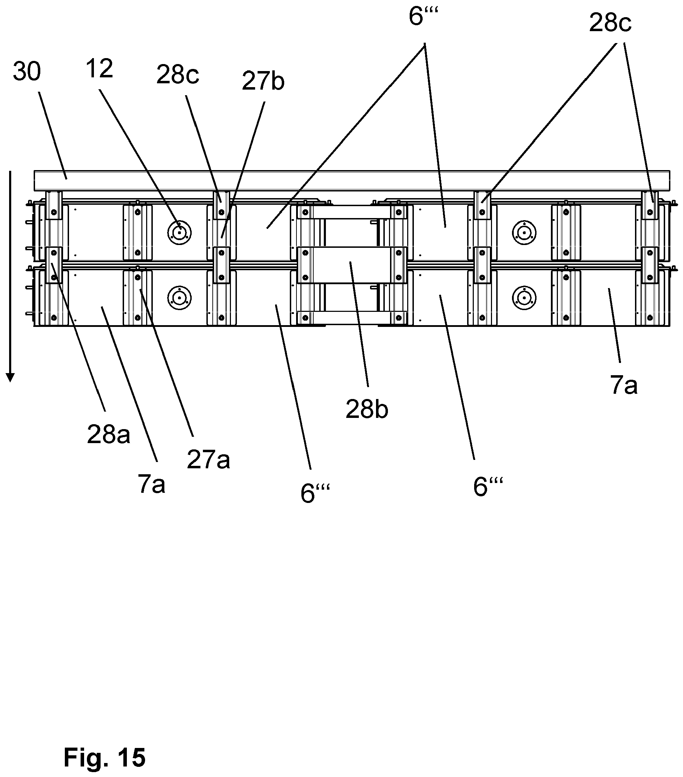

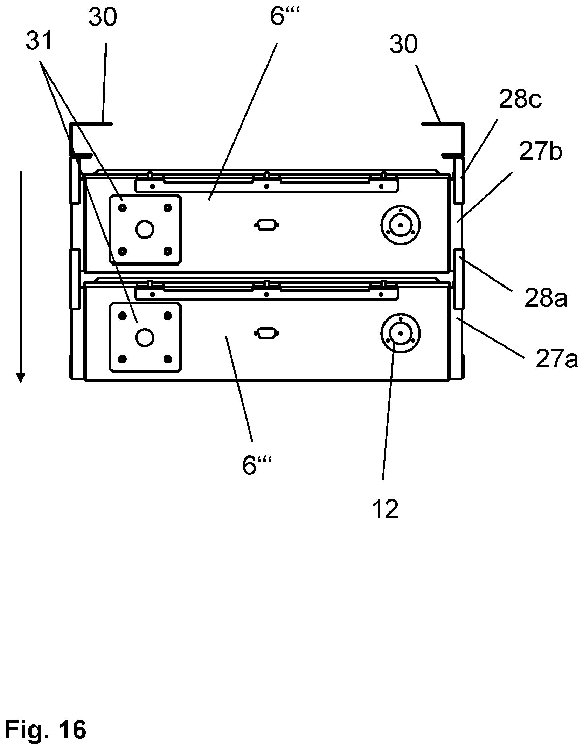

Fig. 15 zeigt eine Seitenansicht auf die Längsseite der Anordnung gemäß Fig. 14 und Fig. 16 zeigt eine Seitenansicht auf die Querseite der Anordnung gemäß Fig. 14.

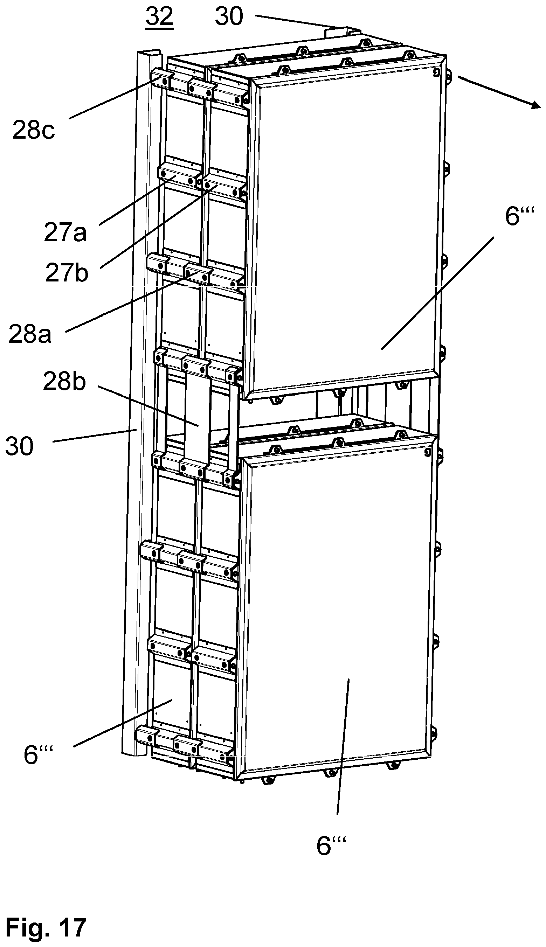

Fig. 17 zeigt eine Anordnung, bei der die Basisschienen 30 seitlich und im Wesentlichen orthogonal zu einem Boden oder einer Ebene angeordnet sind, so dass die Anordnung an einer Montagewand 32 angeordnet werden kann und von dieser im Wesentlichen in Pfeilrichtung orthogonal absteht. Die Basisschienen 30 liegen parallel zueinander und liegen auf einer Seite einander gegenüber. Die Basisschienen 30 sind an ersten Adaptern 27a befestigt, die auf gegenüberliegenden Seiten ein und desselben Gehäuses 6'" angeordnet sind.

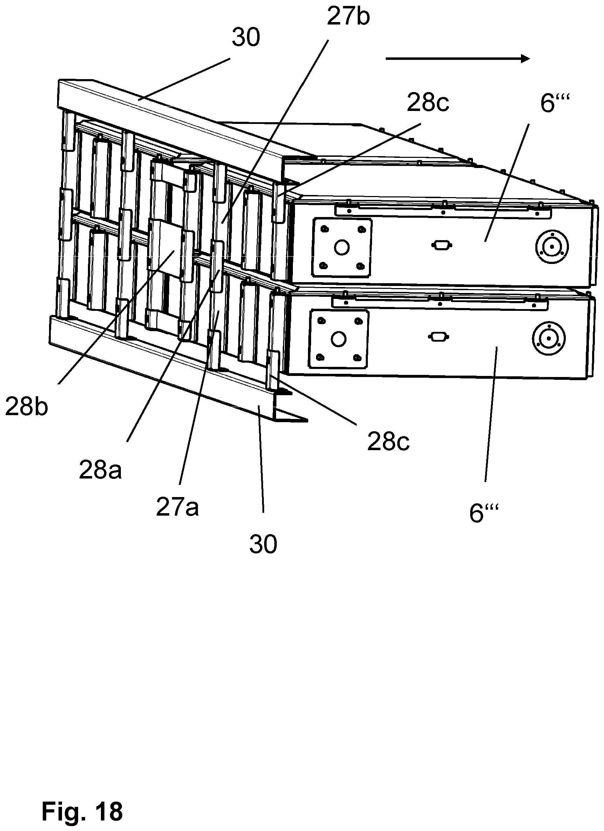

Fig. 18 zeigt eine weitere Anordnung, bei der die Basisschienen 30 seitlich angeordnet sind, so dass die Anordnung an einer Montagewand 32 angeordnet werden kann. Hier liegen die Basisschienen 30 parallel zueinander und liegen auf einer Seite einander gegenüber, wobei die Basisschienen 30 jeweils an ersten Adaptern 27a und zweiten Adaptern 27b zweier verschiedener Gehäuse 6'" angeordnet sind, die übereinander angeordnet sind. Die Adapter 27a, 27b sind dabei kolinear angeordnet.

Die in den Fig. 10 bis 18 gezeigten Anordnungen umfassen mindestens zwei Gehäuse 6"', wobei die Anordnungen zwei Basisschienen 30 aufweisen, durch welche die Anordnung an einem Boden, einer Montagewand 32 oder einer anderen Einrichtung als Ganzes anordenbar sind.

Die in den Fig. 10 bis 18 dargestellten Adapter 27a, 27b sowie die Befestigungselemente 28a, 28b, 28c sind im Querschnitt so relativ zueinander ausgebildet, dass die Befestigungselemente 28a, 28b, 28c auf die Adapter 27a, 27b aufschiebbar und/ oder aufsetzbar sind.

Die Adapter 27a, 27b sind konvex nach außen ausgebildet, so dass die Befestigungselemente 28a, 28b, 28c mit ihrer konkaven Seite auf die Adapter 27a, 27b aufsetzbar sind.

Im konkreten Fall sind die Adapter 27a, 27b im Querschnitt U-förmig ausgebildet und die Befestigungselemente 28a, 28b, 28c sind ebenfalls zumindest abschnittsweise im Querschnitt U-förmig ausgebildet.

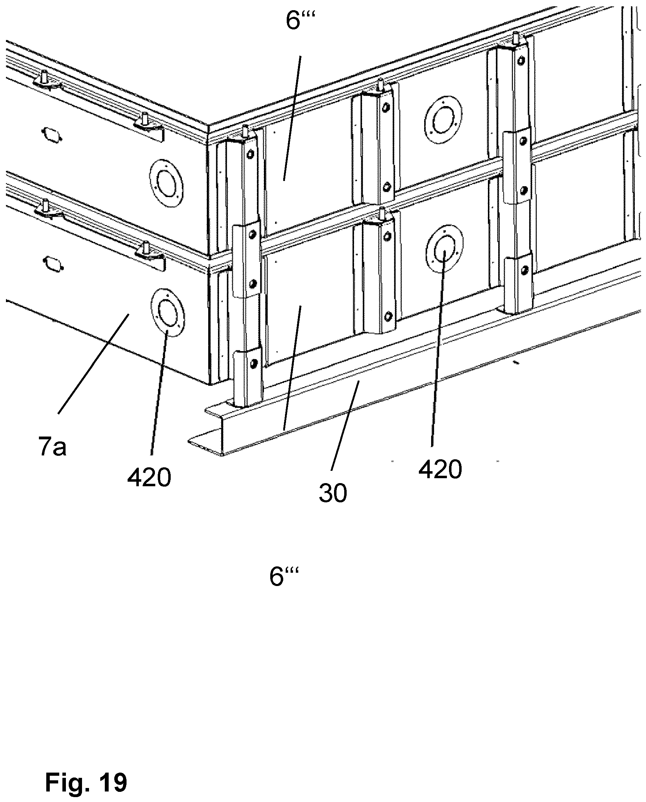

Fig. 19 zeigt eine perspektivische Teilansicht eines Gehäuses 6"', in dem Ventile 420 des Stands der Technik verbaut sind, wobei jedes Ventil 420 eine nicht hochtemperaturbeständige metallische Einfassung und eine aufgeklebte Druckausgleichsmembran umfasst.

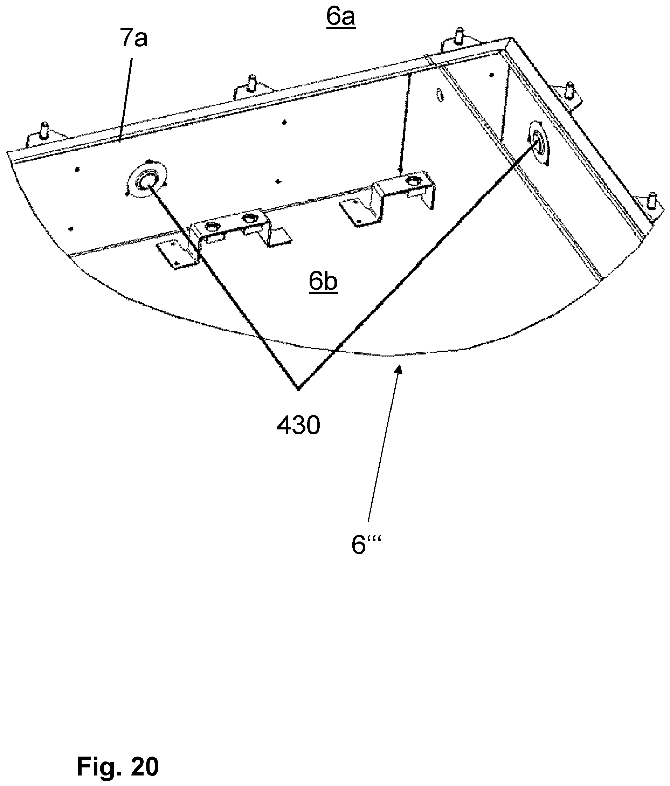

Fig. 20 zeigt eine perspektivische Teilansicht des Gehäuses 6'" gemäß Fig. 19 von innen, wobei in oder an den äußeren Wandungen 7a des Gehäuses 6'" ein Ventil 12'" verbaut ist, welches eine intumeszierende Dichtung 120'" aufweist, um eine Fluidleitung bei Temperaturanstieg oder im Brand- oder Havariefall abzusperren. Konkret weist das Ventil 12'" eine perforierte Metallfolie 430 auf, die dem Inneren 6b des Gehäuses 6'" zugewandt ist.

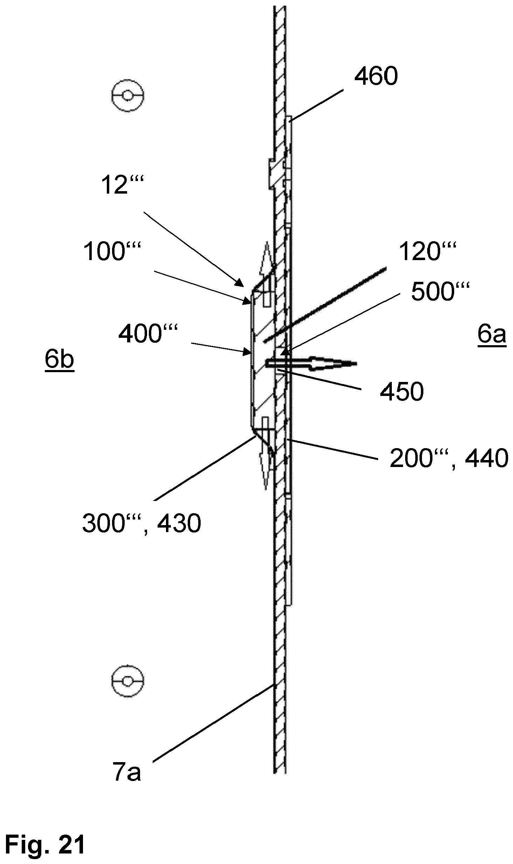

Fig. 21 zeigt eine Schnittansicht des Ventils 12'" gemäß Fig. 20, welches an oder in einer äußeren Wandung 7a des Gehäuses 6'" verbaut ist und die intumeszierende Dichtung 120'" und die perforierte Metallfolie 430 aufweist, welche dem Inneren 6b des Gehäuses 6'" zugewandt ist.

Die perforierte Metallfolie 430 ist konkret als Edelstahlfolie ausgebildet. Die Metallfolie 430 weist Perforationen oder Poren auf, durch die ein Gas hindurchströmen kann. Die Metallfolie 430 ist punktgeschweißt. Die Metallfolie 430 ist topf- oder napfartig ausgebildet, um die intumeszierende Dichtung 120'" zwischen sich und der äußeren Wandung 7a aufzunehmen.

Konkret zeigt Fig. 21 insoweit ein Ventil 12'" zum Druckausgleich und/ oder Drucküberlastabbau für das Gehäuse 6'", umfassend ein Ventilgehäuse 100'" mit einem der Atmosphäre 6a zuwendbaren ersten Abschnitt 200'", der eine Druckausgleichsmembran 440 aufweist, und einem dem Inneren 6b des Gehäuses 6'" zuwendbaren zweiten Abschnitt 300'", der die perforierte Metallfolie 430 aufweist.

Die der Atmosphäre 6a zugewandte Druckausgleichsmembran 440 ist gasdurchlässig, aber nicht flüssigkeitsdurchlässig. Die Druckausgleichsmembran 440 ist nach Art eines Gewebes ausgebildet. Die Druckausgleichsmembran 440 wird von einer Einfassung 460 umgeben und gehalten oder gesichert. Die Druckausgleichsmembran 440 ist bevorzugt aufgeklebt.

Die beiden Abschnitte 200'", 300'" des Ventils sind absperrbar fluidleitend miteinander verbunden. Das Ventilgehäuse 100'" wird insoweit durch zwei Abschnitte 200'", 300'" gebildet, die auf unterschiedlichen Seiten der äußeren Wandung 7a liegen und durch diese getrennt sind.

Es ist mindestens ein Teilventil 400'" vorgesehen, welches thermisch aktivierbar ist, um eine druckausgleichende und/ oder druckabbauende Fluidleitung 500'" zwischen dem ersten Abschnitt 200'" und dem zweiten Abschnitt 300'" abzusperren und/ oder durch die intumeszierende Dichtung 120'" zu verschließen.

Im Fall eines Temperaturanstiegs oder im Brand- oder Havariefall verschließt die intumeszierende Dichtung 120'" die Perforationen oder Poren der perforierten Metallfolie 430, so dass kein Gas mehr vom Inneren 6b durch ein Loch 450 in der äußeren Wandung 7a in die Atmosphäre 6a gelangen kann. Die Fluidleitung 500'" ist somit verschlossen.

In Fig. 21 ist anhand von vertikalen Pfeilen dargestellt, wie sich die intumeszierende Dichtung 120'" im Brandfall ausdehnt. Hohlräume in der napfartigen Metallfolie 430 werden verschlossen, und das Loch 450 in der äußeren Wandung 7a wird ebenfalls verschlossen. Gas, das vor dem Brandfall noch durch die Perforationen der Metallfolie 430 gelangen und die intumeszierende Dichtung 120'" umströmen konnte, um zum Loch 450 und von dort durch die Druckausgleichsmembran 440 in die Atmosphäre 6a zu gelangen, wird nun zurückgehalten.

Die druckausgleichende Fluidleitung 500'" weist Entlüftungsöffnungen im ersten Abschnitt 200'", nämlich in Form von Poren in der Druckausgleichsmembran 440, und weitere Entlüftungsöffnungen im zweiten Abschnitt 300'", nämlich Form von Perforierungen in der Metallfolie 430, auf. Die jeweiligen Entlüftungsöffnungen sind jeweils dem Inneren 6b des Gehäuses 6'" bzw. der Atmosphäre 6a fluidleitend zugewandt.

Die Fluidleitung 500'" ist als erste Fluidleitung 500'" zum Druckausgleich zwischen der Atmosphäre 6a und dem Inneren 6b des Gehäuses 6'" geöffnet und nur durch thermische Beaufschlagung verschließbar.

Eine zweite Fluidleitung 700'" zum Druckabbau durch einen definierten Überdruck innerhalb des Gehäuses 6'" relativ zum Atmosphärendruck ist druckgesteuert öffenbar.

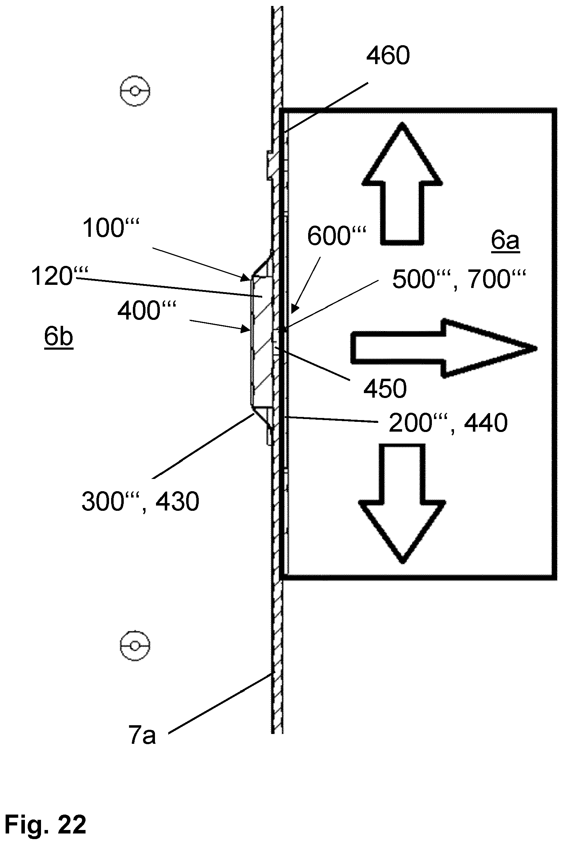

Fig. 22 zeigt dies anhand einer schematischen Ansicht des Druckabbaus im Fall eines Temperaturanstiegs oder im Brand- oder Havariefall kann bzw. können die perforierte Metallfolie 430 und/ oder die Druckausgleichsmembran 440 als Berstscheibe bzw. Berstscheiben ausgestaltet sein und als schwächste Stelle bzw. Stellen des Gehäuses 6'" nachgeben. An dieser Stelle bzw. an diesen Stellen könnten Abluftkanäle installiert sein.

Das Loch 450 in der äußeren Wandung 7a, das Teil der ersten Fluidleitung 500'" ist, wird im Fall des Druckabbaus auch Teil der zweiten Fluidleitung 700"'. Insoweit ist im Ventil auch ein zweites Teilventil 600'" vorgesehen, welches einen Druckabbau bei hohen Drücken erlaubt.

Das Gehäuse 6'", welches mit einem Ventil gemäß den Figuren 20 bis 22 versehen ist, entspricht dem Gehäuse 6'", welches mit Bezug zu den Figuren 10 bis 18 beschrieben ist.

### Bezugszeichen

- 1: erste Schicht
- 2: zweite Schicht
- 2a: thermisch aktivierbares Material
- 3: dritte Schicht
- 4: Gewebe aus Glasfasern
- 5: Klebemittel
- 6, 6', 6", 6"": Gehäuse oder Batteriegehäuse
- 6a: Atmosphäre
- 6b: Inneres von 6', 6", 6'"
- 7: innere Wandung von 6
- 7a: äußere Wandung von 6'"
- 7': innere Wandung von 6'
- 8: Gehäuseinnenraum
- 10, 10', 10": Isolierverkleidung
- 11, 11': Deckel
- 12, 12'": Ventil (Druckausgleich, Drucküberlastabbau)
- 13a, b: Kammer von 6'
- 14a: Kammerwand
- 15: Kabeldurchführung
- 16: Dichtkörper von 15
- 17: Kabel
- 18: Randwulst von 11
- 18': Randbereich von 11'
- 19, 19': Anlagefläche von 6', 6"
- 19a, 19'a: Schenkel von 19, 19' bzw. von 21, 21'
- 20: IP-Dichtung
- 21, 21': Wand von 6', 6"
- 22: zweite Fluidleitung von 12
- 23: erster Abschnitt von 12
- 24: zweiter Abschnitt von 12
- 25: erste Fluidleitung von 12
- 26: Dichtung von 12
- 27a, 27b: erster und zweiter Adapter
- 28a, 28b, 28c: erstes, zweites, drittes Befestigungselement
- 29: Abstandselement von 28b
- 30: Basisschiene
- 31: Steckanschluss
- 32: Montagewand
- 100'": Ventilgehäuse
- 120'": intumeszierende Dichtung
- 200'": erster Abschnitt
- 300'": zweiter Abschnitt
- 400'": Teilventil
- 420: Ventil des Stands der Technik
- 430: Metallfolie
- 440: Druckausgleichsmembran
- 450: Loch in 7a
- 460: Einfassung
- 500'": erste Fluidleitung
- 600'": zweites Teilventil
- 700'": zweite Fluidleitung

## Patentansprüche

1. Gehäuse (6, 6', 6", 6''') zur Aufnahme von Batterien, umfassend einen Gehäuseinnenraum (8, 6b) und mindestens eine äußere Wandung (7a), **dadurch gekennzeichnet, dass** der äußeren Wandung (7a) mindestens ein Adapter (27a, 27b) zum Anbinden eines weiteren Gehäuses (6, 6', 6", 6"') und/ oder einer Basisschiene (30) zugeordnet ist.

2. Gehäuse nach Anspruch 1, **dadurch gekennzeichnet, dass** der Adapter (27a, 27b) Schraubmittel, Rastmittel oder Klemmmittel aufweist, um zwei Gehäuse (6, 6', 6", 6''') aneinander anzubinden und/ oder ein Gehäuse (6"') an eine Basisschiene (30) anzubinden.

3. Gehäuse nach Anspruch 1 oder 2, **dadurch gekennzeichnet, dass** ein erster Adapter (27a) eines ersten Gehäuses (6, 6', 6", 6''') durch ein Befestigungselement (28a, 28b) mit einem zweiten Adapter (27b) eines zweiten Gehäuses (6, 6', 6", 6"') verbindbar und/ oder verbunden ist.

4. Gehäuse nach einem der voranstehenden Ansprüche, **dadurch gekennzeichnet, dass** ein Adapter (27a, 27b) eines Gehäuses (6, 6', 6", 6"') durch ein Befestigungselement (28c) mit einer Basisschiene (30) verbindbar und/ oder verbunden ist.

5. Gehäuse nach Anspruch 3 oder 4, **dadurch gekennzeichnet, dass** ein erstes Befestigungselement (28a) zwei übereinanderliegende Gehäuse (6, 6', 6", 6'") und deren übereinanderliegende und/ oder kolinear angeordnete Adapter (27a, 27b) verbindet.

6. Gehäuse nach einem der Ansprüche 3 bis 5, **dadurch gekennzeichnet, dass** ein zweites Befestigungselement (28b) zwei nebeneinander liegende Gehäuse (6, 6', 6", 6''') und deren nebeneinander und/ oder parallel liegende Adapter (27a, 27b) verbindet.

7. Gehäuse nach Anspruch 6, **dadurch gekennzeichnet, dass** das zweite Befestigungselement (28b) zwei nebeneinander liegende Gehäuse (6, 6', 6", 6"') durch ein Abstandselement (29) voneinander beabstandet.

8. Gehäuse nach einem der voranstehenden Ansprüche, **dadurch gekennzeichnet, dass** der Adapter (27a, 27b) als Trägerschiene ausgestaltet ist, auf den ein Befestigungselement (28a, 28b, 28c) aufsetzbar ist.

9. Gehäuse nach Anspruch 8, **dadurch gekennzeichnet, dass** der Adapter (27a, 27b) und das Befestigungselement (28a, 28b, 28c) zumindest im Bereich ihrer Anlage aneinander im Querschnitt U- oder V- förmig ausgebildet sind.

10. Gehäuse nach einem der voranstehenden Ansprüche, **dadurch gekennzeichnet, dass** das Gehäuse (6, 6', 6", 6''') mindestens ein Ventil (12, 12"') zum Druckausgleich und/ oder Drucküberlastabbau aufweist, welches ein intumeszierendes Material zum Verschließen einer Fluidleitung aufweist, und/ oder dass das Gehäuse (6, 6', 6", 6''') mindestens eine Kabeldurchführung (15) aufweist, welche ein intumeszierendes Material zum Verschließen eines Durchbruchs für ein Kabel (17) aufweist.

11. Anordnung, umfassend mindestens zwei Gehäuse (6, 6', 6", 6'") nach einem der voranstehenden Ansprüche, wobei die Anordnung mindestens eine Basisschiene (30) aufweist, durch welche die Anordnung an einem Boden, einer Montagewand (32) oder einer anderen Einrichtung als Ganzes anordenbar ist.
